Europäisches Patentamt

European Patent Office

Office européen des brevets

(11) Veröffentlichungsnummer: **0 491 987 A1**

# EUROPÄISCHE PATENTANMELDUNG

(21) Anmeldenummer: **90125469.8**

(22) Anmeldetag: **24.12.90**

(51) Int. Cl.⁵: **B60N 2/24**

(43) Veröffentlichungstag der Anmeldung:
**01.07.92 Patentblatt 92/27**

(84) Benannte Vertragsstaaten:
**AT BE CH DE ES FR GB IT LI NL SE**

(71) Anmelder: **Ignaz Vogel GmbH & Co KG,
Fahrzeugsitze
Kleinsteinbacher Strasse 42-44
W-7500 Karlsruhe 41-Stu(DE)**

(72) Erfinder: **Vogel, Ignaz
Kleinsteinbacher Strasse 42-44
W-7500 Karlsruhe 41 Stu.(DE)**

(74) Vertreter: **Trappenberg, Hans
Wendtstrasse 1 Postfach 1909
W-7500 Karlsruhe 21(DE)**

(54) **Fahrgastsitz.**

(57) Durch das zum Tragen des Sitz- und Rückenteils an Fahrgastsitzen notwendige Untergestell wird die Beinfreiheit des hinter einem solchen Sitz sitzenden Fahrgastes eingeengt.

Eine erweiterte Beinfreiheit wird nach der Erfindung dadurch erreicht, daß der zwischen Sitz und Untergestell angeordnete Aufbau zwei mit den Innenseiten zueinander gekehrte, den Sitzteil zwischen sich aufnehmende Winkelschienen sind.

EP 0 491 987 A1

Die Erfindung betrifft einen Fahrgastsitz mit Untergestell, das gebildet ist aus im Abstand mindestens einer Sitzbreite - vorzugsweise im doppelten Abstand zum Aufbau eines Doppel-Fahrgastsitzes - angeordneten Stützfüßen, die über mindestens eine, vorzugsweise zwei Quertraversen, miteinander verbunden sind, auf denen (der) der eigentliche Sitz mit Sitzteil und am Sitzteil angeordneten Rückenteil über einen mit ihnen verbundenen Aufbau angebracht ist.

Einen derartigen Fahrgastsitz zeigt beispielsweise die DE-PS 36 62 770 (EP-B-02 63 189). Aus dieser Patentschrift ist auch der Aufbau ersichtlich, an den das Gestell für die Rückenlehne angelenkt ist und auf den der Sitzteil zu montieren ist. Da dieser Aufbau über den eigentlichen Sitzteil die gesamte Sitzlast aufnehmen muß, ist er, auch unter Berücksichtigung der bei Fahrgastsitzen unvermeidlichen Belastungsstöße, sehr stabil gehalten. Dies bedingt ein hohes Widerstandsmoment in Richtung der Sitzlast, mithin einen verhältnismäßig hohen Aufbau. Dies wiederum führt dazu, da die Sitzhöhe durch die anatomischen Maße der Fahrgäste vorgegeben ist, daß die Quertraversen verhältnismäßig tief liegen, was wiederum die Beinfreiheit des Fahrgastes, der hinter diesem Fahrgastsitz Platz nimmt, beeinträchtigt. Um diese Beeinträchtigung zu vermeiden, muß ein verhältnismäßig großer Sitzabstand bei den üblicherweise hintereinander angeordneten Fahrgastsitzen eingehalten werden, was wiederum die Transportkapazität beeinträchtigt.

Aufgabe der Erfindung ist es daher eine Möglichkeit anzugeben, wie dieser hohe Aufbau vermieden oder zumindest in der Höhe so reduziert werden kann, daß sich eine bessere Beinfreiheit durch Höherlegen der Quertraversen ergibt. Erreicht wird dies in erfindungsgemäßer Weise dadurch, daß der Aufbau zwei mit den Innenseite zueinander gekehrte, den Sitzteil zwischen sich aufnehmende, quer zu den Quertraversen liegende Winkelschienen sind.

Nicht mehr also wie bisher wird zwischen den Quertraversen und dem Sitzteil ein gesonderter Aufbau vorgesehen, sondern es werden Winkelschienen eingesetzt, deren in Sitzlastrichtung liegende Schenkel die gewünschte Festigkeit aufweisen. Es muß aber nicht mehr, wie bisher, das Sitzteil auf diesen Aufbau aufgesetzt werden, sondern die Winkelschienen nehmen den Sitzteil zwischen sich auf. Dadurch wird zwar die erwünschte Festigkeit in Richtung der Sitzlast erreicht, ohne daß jedoch die Höhe dieses Aufbaues sich vergrößernd auf den Abstand zwischen Sitzfläche und Quertraversen auswirkt, so daß diese Quertraversen nunmehr um die Höhe des bisherigen Aufsatzes nach oben versetzt werden können. Damit ergibt sich die gewünschte verbesserte Beinfreiheit und damit auch die Möglichkeit, die Fahrgastsitze enger hintereinander anzuordnen.

Die Winkelschienen können selbstverständlich entsprechend der Belastung ungleichschenklig ausgeführt werden und es können auch die auf den Quertraversen aufliegenden Schenkel entsprechend den Kräfteverhältnissen durchbrochen sein.

Bewährt hat es sich, für die Quertraversen Profilstäbe vorzusehen, die zumindest oberseitig eine Nut zur Aufnahme von Hammerkopfschrauben aufweisen, wie dies beispielsweise ebenfalls die DE-PS 36 62 770 zeigt. Dadurch besteht die Möglichkeit, die Winkelschienen jeweils im gewünschten Abstand voneinander zu befestigen. Gleichzeitig können die hier verwendeten Hammerkopfschrauben zum Anbringen einer Haltespindel dienen, auf die in an sich bekannter Weise das Sitzteil mittels eines Schnappverschlusses aufgeschoben werden kann. Wird diese Haltespindel mit einem unrunden Fußteil versehen, so kann sie direkt als Mutter für diese Hammerkopfschrauben eingesetzt werden.

Auf der Zeichnung ist ein Ausführungsbeispiel des Erfindungsgegenstandes schematisch dargestellt, und zwar zeigen:

Fig. 1 eine Prinzipskizze,
Fig. 2 eine Haltespindel,
Fig. 3 und
Fig. 4 Winkelschienen in Ansicht.

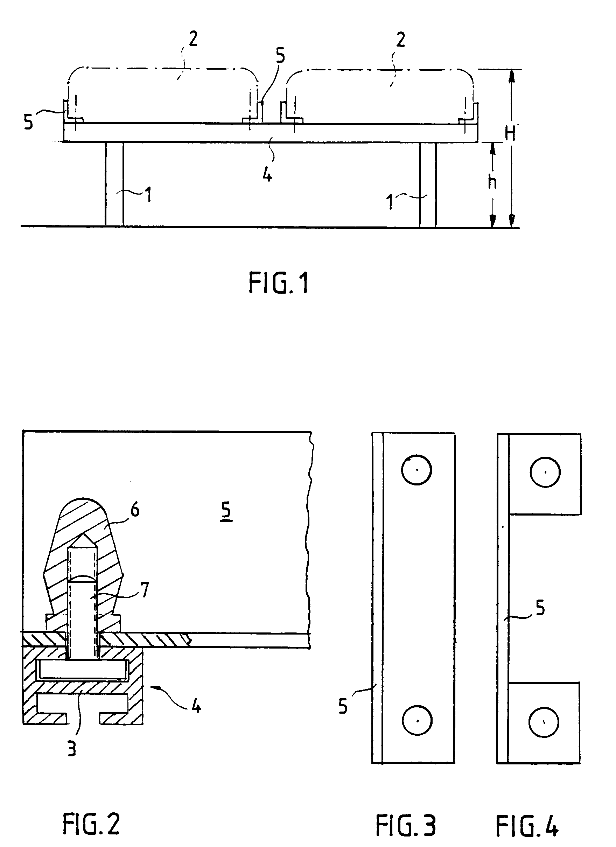

Auf zwei Stützfüßen (1), die etwa im Abstand der doppelten Sitzbreite von Sitzteilen (2) angeordnet sind, sind etwa im Abstand der Sitztiefe voneinander Profilstäbe (3) als Quertraverse (4) angebracht. Quer zu diesen Quertraversen (4) verlaufen Winkelschienen (5) (Fig. 3), die jeweils zwischen sich das Sitzteil (2) aufnehmen. Die Befestigung dieser Winkelschienen kann, wie in Fig. 2 dargestellt, über Haltespindeln (6) erfolgen, die als Mutter auf Hammerkopfschrauben (7) unter Anpressen der Winkelschiene (5) auf die Quertraverse (4) aufgeschraubt sind. Die Winkelschienen (5) können hierbei durchlaufend sein, wie in Fig. 3 dargestellt, oder auch zur Gewichtsminderung durchbrochen, wie dies die Fig. 4 zeigt.

Der Einsatz dieser Winkelschienen läßt es zu, daß bei gleichbleibender Höhe H der Sitzteile (2) die Quertraversen (4) auf die Höhe h höhergesetzt werden können, wodurch sich eine verbesserte Beinfreiheit und damit die Möglichkeit, die Sitze näher hintereinander anzuordnen, gegeben ist.

**Patentansprüche**

1. Fahrgastsitz mit Untergestell, das gebildet ist aus im Abstand mindestens einer Sitzbreite - vorzugsweise im doppelten Abstand zum Aufbau eines Doppel-Fahrgastsitzes - angeordneten Stützfüßen, die über mindestens eine, vorzugsweise zwei Quertraversen, miteinander verbunden sind, auf denen (der) der eigentliche Sitz mit Sitzteil und am Sitzteil angeordneten Rückenteil über einen mit ihnen verbundenen Aufbau angebracht ist,
dadurch gekennzeichnet,
daß der Aufbau zwei mit den Innenseite zueinander gekehrte, den Sitzteil (2) zwischen sich aufnehmende, quer zu den Quertraversen (4) liegende Winkelschienen (5) sind.

2. Fahrgastsitz nach Anspruch 1,
dadurch gekennzeichnet,
daß die Winkelschiene (5) ungleichschenklig ist.

3. Fahrgastsitz nach Anspruch 1 oder 2,
dadurch gekennzeichnet,
daß der auf den Quertraversen (4) aufliegende Schenkel der Winkelschiene (5) durchbrochen ist.

4. Fahrgastsitz nach Anspruch 1,
dadurch gekennzeichnet,
daß die Quertraversen (4) zumindest oberseitig eine Nut zur Aufnahme von Hammerkopfschrauben (7) aufweisen und die Winkelschienen (5) mittels solcher Schrauben (7) auf den Winkelschienen (5) im jweils gewünschten Abstand voneinander anschraubbar sind.

5. Fahrgastsitz nach Anspruch 4,
dadurch gekennzeichnet,
daß die Mutter für die Hammerkopfschrauben (7) eine mit einem entsprechenden Gewinde versehene, mit einer entsprechenden, am Sitzteil befestigten Haltevorrichtung zusammenarbeitenden Haltespindel (6) ist.

6. Fahrgastsitz nach Anspruch 5,
dadurch gekennzeichnet,
daß die Haltespindel (6) mit einem unrunden Fußteil versehen ist.

FIG.1

FIG.2          FIG.3     FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 147 045 (HAMMERSTEIN) <br> * Seite 12, Zeilen 3-15; Fig. * | 1 | B 60 N 2/24 |
| A | --- | 2 | |
| A | EP-A-0 229 612 (VOGEL) <br> * Seite 3, Zeilen 17-28; Fig. * <br> --- | 1 | |
| A,D | EP-A-0 263 189 (VOGEL) <br> --- | | |
| A | EP-A-0 330 594 (SABLE) <br> ----- | | |

**RECHERCHIERTE SACHGEBIETE (Int. Cl.5)**

B 60 N

Der vorliegende Recherchenbericht wurde für alle Patentansprüche erstellt

| Recherchenort | Abschlußdatum der Recherche | Prüfer |
|---|---|---|
| DEN HAAG | 21-08-1991 | HORVATH R.C. |

EPO FORM 1503 03.82 (P0403)